# EUROPÄISCHE PATENTANMELDUNG

(11) **EP 4 438 664 A1**
(43) Veröffentlichungstag der Anmeldung: **02.10.2024**
(21) Anmeldenummer: 24164364.2
(22) Anmeldetag: 19.03.2024
(51) Int. Cl.: C08J 9/00, C08J 9/14

(54) **DISPERGIERMITTEL FÜR FESTSTOFFHALTIGE PHENOLSCHÄUME**

(30) Priorität: 28.03.2023 EP 23164585
(71) Anmelder: Evonik Operations GmbH, 45128 Essen (DE)
(72) Erfinder: Suchan, Michael, 45894 Gelsenkirchen (DE); Otto, Sarah, 45128 Essen (DE)
(74) Vertreter: Evonik Patent Association

(57) **Zusammenfassung**

Die Erfindung betrifft eine Zusammensetzung zur Herstellung von Phenolschaum, umfassend mindestens ein Phenolharz, mindestens ein Treibmittel, mindestens einen Katalysator sowie mindestens einen Feststoff, wobei die Zusammensetzung mindestens ein Tensid ausgewählt aus der Gruppe der quartären silizium-freien Ammoniumverbindungen enthält.

## Beschreibung

Die vorliegende Erfindung liegt auf dem Gebiet der Phenolschäume. Insbesondere betrifft sie eine Zusammensetzung zur Herstellung von Phenolschaum, Verfahren zur Herstellung von Phenolschaum, erfindungsgemäß hergestellten Phenolschaum sowie dessen Verwendung. Unter Phenolschaum wird im Rahmen der vorliegenden Erfindung insbesondere ein Schaumstoff erhältlich durch Reaktion eines Phenolharzes mit einer Säure als Katalysator unter Zusatz eines Treibmittels verstanden. Phenolschäume sind dem Fachmann bekannt und beispielsweise in EP 3830174 A1, DE 602004006376 T2, EP 2898005 A1, EP 1922357 A1, WO 2022043561 A1, EP 4073155 A1, AU 2021238847 A1 oder WO 2006114777 A1 beschrieben. Phenolschäume werden synonym auch als Phenolharzschäume bezeichnet.

Bei der Herstellung von Phenolschaum können in der Regel zellstabilisierende bzw. schaumstabilisierende Additive eingesetzt werden, welche für eine feinzellige, gleichmäßige und störungsarme Schaumstruktur sorgen sollen und damit die Gebrauchseigenschaften, insbesondere zum Beispiel das thermische Isolationsvermögen, des Schaumes im wesentlichen Maße positiv beeinflussen. Gewöhnlich können hierfür Schaumstabilisatoren eingesetzt werden, wie z.B. Schaumstabilisatoren auf Basis ethoxylierter Pflanzenöle, wie z.B. Rizinusöl, wie z.B. in EP 3830174 A1 beschrieben. Als besonders effektiv hat sich der Einsatz von Polyether-modifizierten Siloxanen (PES), wie z.B. in WO 2022043561 A1 beschrieben, herausgestellt, um die Gebrauchseigenschaften weiter zu verbessern. Insbesondere die Kombination aus ethoxylierten Pflanzenölen und Polyether-modifizierten Siloxanen führt zu hervorragenden Gebrauchseigenschaften. Diese Kombination stellt daher einen bei der Herstellung von Phenolschaum üblicherweise bevorzugten Typ der Schaumstabilisatoren dar.

Im Zusammenhang mit der Bereitstellung von Phenolschäumen ist es ein besonders wichtiges Anliegen, diese besonders kostengünstig herzustellen. Ein weiteres Anliegen ist es, diese besonders nachhaltig, z.B. durch den Einsatz von bio-basierten und/oder recycelten Materialien, herzustellen und/oder die Flammschutzeigenschaften z.B. durch den Zusatz von Flammschutzmitteln zu verbessern. Aus diesem Grund können verschiedene Feststoffe eingesetzt werden. Entsprechende Feststoffe, welche für den Einsatz in Phenolschaum geeignet sind, sind an sich bekannt.

Der Einsatz von Feststoffen bringt allerdings erhebliche Probleme hinsichtlich der Dispergierung in den flüssigen Ausgangsstoffen sowie mit der Verarbeitung mit sich. Dies beinhaltet unter anderem Sedimentation, erschwerte Redispergierung nach Sedimentation, inhomogene Verteilung im Phenolschaum und vor allem auch ein daraus resultierendes inhomogenes Eigenschaftsprofil der so hergestellten Schäume.

Die konkrete Aufgabe der vorliegenden Erfindung lag vor diesem Hintergrund darin, die Bereitstellung von Phenolschäumen zu ermöglichen, welche einen oder mehrere Feststoffe enthalten, aber die o.g. Probleme der Sedimentation, erschwerten Redispergierung nach Sedimentation und/oder inhomogenen Verteilung im Material zu überwinden, insbesondere unter Vermeidung einer zu starken Zunahme der Viskosität der Komponenten.

In diesem Zusammenhang konnte im Rahmen der vorliegenden Erfindung überraschend gefunden werden, dass der Einsatz von einem oder mehreren Tensiden ausgewählt aus der Gruppe der quartären silizium-freien Ammoniumverbindungen, wie z.B. Esterquats und/oder Alkylquats, die gewünschte deutliche Verbesserung der Redispergierung, Sedimentationsstabilität sowie ein homogeneres Eigenschaftsprofil des Materials ermöglicht. Dabei wird die Viskosität der Komponenten vorteilhafterweise in nur noch deutlich geringerem Maße beeinflusst.

Die konkrete Aufgabe der vorliegenden Erfindung wird gelöst vom Gegenstand der Erfindung. Der Gegenstand der Erfindung ist eine Zusammensetzung zur Herstellung von Phenolschaum, umfassend mindestens ein Phenolharz, mindestens ein Treibmittel, mindestens einen Katalysator sowie mindestens einen Feststoff, wobei die Zusammensetzung mindestens ein Tensid ausgewählt aus der Gruppe der quartären silizium-freien Ammoniumverbindungen enthält.

Im Rahmen der vorliegenden Erfindung wird unter Feststoff ein Stoff verstanden, welcher bei 25°C und 101,325 kPa im festen Aggregatzustand vorliegt.

Der erfindungsgemäße Gegenstand geht mit vielfältigen Vorteilen einher. So ermöglicht er die Bereitstellung von Phenolschäumen mit hohen Feststoffanteilen. Vorteilhafterweise wird dies ermöglicht, ohne die sonstigen Eigenschaften des Materials, insbesondere seine mechanischen Eigenschaften, zu beeinträchtigen. Insbesondere verfügen die Phenolschäume über sehr gute Isolationseigenschaften und weisen ein hervorragendes Langzeitverhalten sowie eine hohe Oberflächenqualität auf. Die Erfindung ermöglicht eine besonders homogene Verteilung von Feststoffen im Phenolschaum. Die Erfindung ermöglicht insgesamt eine einfache Verarbeitung der Feststoffe im Rahmen der Herstellung. Der oder die Feststoffe können auf einfache Weise, z.B. zusammen mit dem mindestens einen Tensid ausgewählt aus der Gruppe der quartären silizium-freien Ammoniumverbindungen, wie vorzugsweise Esterquats und/oder Alkylquats, in das Phenolharz eingebracht werden. Sedimentationsprobleme bei der Lagerung der Dispersion aus Phenolharz und Feststoff können durch die vorliegende Erfindung deutlich reduziert oder gar vermieden werden. Die Erfindung ermöglicht insbesondere auch eine sehr gute Redispergierbarkeit des Feststoffes im Falle einer Sedimentation nach sehr langer Lagerung, so dass beispielsweise ständiges Rühren oder Durchmischen bei Lagerung nicht mehr erforderlich ist. Die Erfindung ermöglicht auch eine homogenere Verteilung des Feststoffes im Phenolschaum was zu einem gleichmäßigerem Eigenschaftsprofil führt.

Tenside aus der Gruppe der quartären, silizium-freien Ammoniumverbindungen, wie z.B. Esterquats, Amidoaminquats, Imidazoliniumquats, Cetylpyridiniumchlorid und/oder Alkylquats, sind dem Fachmann an sich bekannt. So sind z.B. Esterquats sowie Alkylquats quartäre, silizium-freie Ammoniumverbindungen mit mindestens einem langen Kohlenwasserstoffrest. Während es sich bei Alkylquats in der Regel um Tetraalkylammoniumsalze handelt, basieren Esterquats in der Regel auf quartären Triethanol-Methyl-Ammonium- oder quartären Diethanol-Dimethyl-Ammonium-Verbindungen, die mit mindestens einer Fettsäure verestert wurden.

Alkylquats und Esterquats werden seit langem in Kosmetika oder Wasch- und Reinigungsmitteln, z.B. Weichspülern eingesetzt und ihre Herstellung ist dem Fachmann seit langem bekannt. Alkylquats können z.B. durch Umsetzung des entsprechenden Amins mit Methylierungsmitteln wie z.B. Chlormethan oder Dimethylsulfat hergestellt werden. Die Herstellung von Esterquats kann z.B. durch Veresterung von Methyldiethanolamin oder Triethanolamin mit Fettsäuren und anschließender Quaternisierung mit z.B. Dimethylsulfat oder Chlormethan erfolgen.

Die erfindungsgemäße Zusammensetzung enthält mindestens ein Tensid ausgewählt aus der Gruppe der quartären silizium-freien Ammoniumverbindungen. Gemäß einer besonders bevorzugten Ausführungsform der Erfindung ist das mindestens eine Tensid ausgewählt aus der Gruppe bestehend aus Esterquat der Formel (1), Esterquat der Formel (2), Alkylquat der Formel (3), Imidazoliniumquat der Formel (4), Amidoaminquat der Formel (5) und Cetylpyridiniumchlorid, wobei 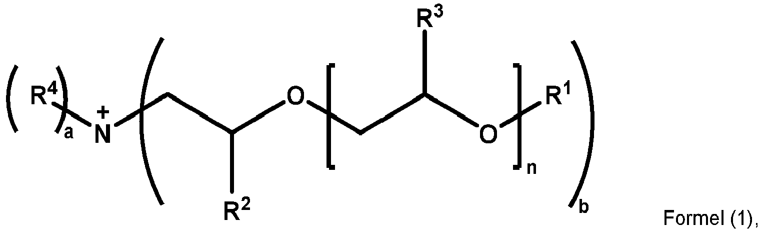 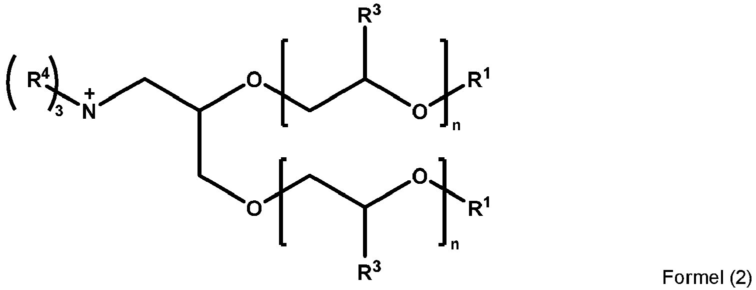
mit R¹ ein Acylrest einer gesättigten oder einfach oder mehrfach ungesättigten, linearen oder verzweigten Fettsäure mit einer Kettenlänge von 8 bis 22 Kohlenstoffatomen oder der Acylrest der Rizinolsäure, oder Wasserstoff,
wobei eine Verbindung der Formel (1) oder (2) unterschiedliche Reste R¹ enthalten kann und mit der Maßgabe das mindestens ein Rest R¹ einer der genannten Acylreste sein muss,
mit R² jeweils unabhängig voneinander ein Alkylrest mit 1 bis 6 Kohlenstoffatomen oder Wasserstoff, bevorzugt Wasserstoff, Methyl, Ethyl, Propyl oder Isopropyl, besonders bevorzugt Wasserstoff oder Methyl,
mit R³ jeweils unabhängig voneinander ein Alkylrest mit 1 bis 6 Kohlenstoffatomen oder Wasserstoff, bevorzugt Wasserstoff, Methyl, Ethyl, Propyl oder Isopropyl, besonders bevorzugt Methyl oder Wasserstoff,
mit R⁴ ein Alkylrest mit 1 bis 6 Kohlenstoffatomen oder ein Hydroxyethylrest oder Wasserstoff, bevorzugt Methyl, Ethyl, Propyl oder Isopropyl, besonders bevorzugt Ethyl oder Methyl, ganz besonders bevorzugt Methyl,
wobei eine Verbindung der Formel (1) und/oder (2) unterschiedliche Reste R⁴ enthalten kann und
wobei n = 0 bis 20, bevorzugt 0 bis 10, besonders bevorzugt 0,
wobei a = 1 bis 3 und b = 1 bis 3,
mit der Maßgabe, dass a + b = 4,
und/oder wobei 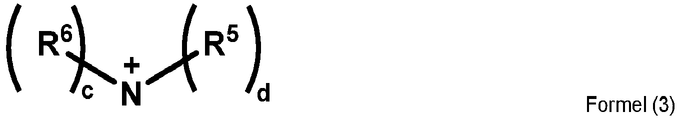
mit R⁵ ein gesättigter oder einfach oder mehrfach ungesättigter, linearer oder verzweigter Alkylrest mit einer Kettenlänge von 8 bis 24 Kohlenstoffatomen,
wobei eine Verbindung der Formel (3) unterschiedliche Reste R⁵ enthalten kann,
mit R⁶ ein Alkylrest mit 1 bis 6 Kohlenstoffatomen oder ein Hydroxyethylrest oder ein Benzylrest oder Wasserstoff, bevorzugt Methyl, Ethyl, Propyl, Isopropyl oder Benzyl, besonders bevorzugt Ethyl oder Methyl, ganz besonders bevorzugt Methyl,
wobei eine Verbindung der Formel (3) unterschiedliche Reste R⁶ enthalten kann und wobei c = 1 bis 3 und d = 1 bis 3,
mit der Maßgabe, dass c + d = 4,
und/oder wobei 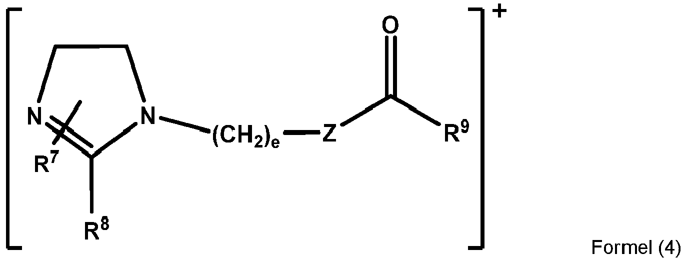
mit R⁷ ein Alkylrest mit 1 bis 6 Kohlenstoffatomen oder ein Hydroxyethylrest oder Wasserstoff, bevorzugt Methyl, Ethyl, Propyl oder Isopropyl, besonders bevorzugt Ethyl oder Methyl, ganz besonders bevorzugt Methyl,
mit R⁸ ein gesättigter oder einfach oder mehrfach ungesättigter, linearer oder verzweigter Alkylrest mit 8 bis 22 Kohlenstoffatomen oder ein Rest O(CO)R¹⁰, mit R¹⁰ ein aliphatischer, gesättigter oder einfach oder mehrfach ungesättigter, linearer oder verzweigter Alkylrest mit 7 bis 21 Kohlenstoffatomen,
mit R⁹ ein aliphatischer gesättigter oder einfach oder mehrfach ungesättigter, linearer oder verzweigter Alkylrest mit 7 bis 21 Kohlenstoffatomen,
mit Z eine NH-Gruppe oder Sauerstoff,
wobei e ganzzahlige Werte zwischen 1 und 4 annehmen kann,
und/oder wobei, 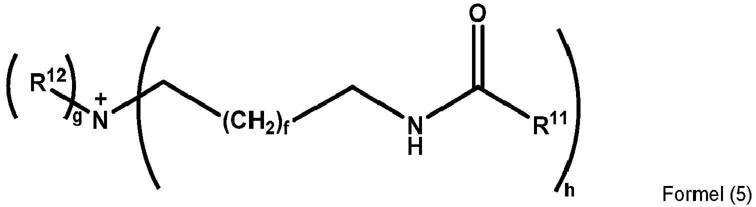
mit R¹¹ ein gesättigter oder einfach oder mehrfach ungesättigter, linearer oder verzweigter Alkylrest mit einer Kettenlänge von 7 bis 21 Kohlenstoffatomen,
mit R¹² ein Alkylrest mit 1 bis 6 Kohlenstoffatomen oder ein Hydroxyethylrest oder Wasserstoff, bevorzugt Methyl, Ethyl, Propyl oder Isopropyl, besonders bevorzugt Ethyl oder Methyl, ganz besonders bevorzugt Methyl,
wobei eine Verbindung der Formel (5) unterschiedliche Reste R¹² enthalten kann und wobei f ganzzahlige Werte zwischen 0 und 5 annehmen kann,
wobei h = 1 oder 2 und g = 2 oder 3,
mit der Maßgabe das h + g = 4,
wobei eine Verbindung der Formel (5) für h = 2 unterschiedliche Werte für f annehmen kann und unterschiedliche Reste R¹¹ enthalten kann,
sofern R⁴, R⁶, R⁷ oder R¹² einen Hydroxyethylrest umfasst, kann dieser auch alkoxyliert sein und dieser ggf. alkoxylierte Hydroxyethylrest kann Wiederholeinheiten auf Basis von Ethylenoxid, Propylenoxid, Butylenoxid und/oder Styroloxid enthalten und 1-15 Wiederholeinheiten, bevorzugt 1-10 Wiederholeinheiten, umfassen.

Es können ein oder mehrere der erfindungsgemäßen Tenside, ausgewählt aus der Gruppe der quartären silizium-freien Ammoniumverbindungen, insbesondere wie zuvor beschrieben, eingesetzt werden, d.h. es können auch beliebige Mischungen solcher Tenside eingesetzt werden. Der Einsatz von Esterquat der Formel (1) und/oder Esterquat der Formel (2) ist dabei besonders bevorzugt. Es ist also besonders bevorzugt, mindestens ein Tensid, ausgewählt aus der Gruppe bestehend aus Esterquat der Formel (1) und Esterquat der Formel (2), einzusetzen.

Entsprechende Zusammensetzungen, die eine oder mehrere der entsprechenden quartären silizium-freien Ammoniumverbindungen enthalten, zeigen besonders vorteilhafte Ergebnisse hinsichtlich der zuvor beschriebenen erfindungsgemäßen Vorteile.

Es entspricht einer weiteren besonders bevorzugten Ausführungsform der Erfindung, wenn in Formel (1) und/oder Formel (2) R¹ jeweils unabhängig voneinander ausgewählt ist aus den Acylresten der Säuren aus der Gruppe bestehend aus Ölsäure, Isostearinsäure, Laurinsäure, Palmitinsäure, Elaidinsäure, Vaccensäure, Gadoleinsäure, Icosensäure, Cetoleinsäure, Erucasäure, Nervonsäure, Linolsäure, Alpha-Linolensäure, Gamma-Linolensäure, Calendulasäure, Punicinsäure, Alpha-Elaeostearinsäure, Beta-Elaeostearinsäure, Arachidonsäure, Timnodonsäure, Clupanodonsäure und Cervonsäure.

Weiterhin ist es bevorzugt, wenn in Formel (1) a = b = 2 und/oder in Formel (5) h = 1 und g = 3 ist. Dies entspricht ebenfalls einer weiteren besonders bevorzugten Ausführungsform der Erfindung.

Eine erfindungsgemäße Zusammensetzung, zusätzlich enthaltend mindestens ein Gegenanion zu den Verbindungen der allgemeinen Formeln (1), (2), (3), (4) und/oder (5) ausgewählt aus der Gruppe bestehend aus Chlorid, Bromid, lodid, Alkylsulfat, Ethylsulfat, Alkylsulfonat, Triflat, Tosylat, Phosphat, Sulfat, Hydrogensulfat, Lactat, Glycolat, Acetat und Citrat, entspricht einer weiteren besonders bevorzugten Ausführungsform der Erfindung.

Eine besonders bevorzugte erfindungsgemäße Zusammensetzung zeichnet sich dadurch aus, dass der mindestens eine Feststoff ausgewählt ist aus der Gruppe bestehend aus
(a) feste Flammschutzmittel, vorzugsweise Ammoniumpolyphosphat, Melamin, Melaminbeschichtetes Ammoniumpolyphosphat, Melamin mikroverkapseltes Ammoniumpolyphosphat, Melamin-Formaldehydharz mikroverkapseltes Ammoniumpolyphosphat, Melamincyanurat, roten Phosphor, Zinkborat, Melaminpolyphosphat, Blähgraphit und/oder Antimontrioxid, insbesondere roter Phosphor und/oder Ammoniumpolyphosphat,
(b) Kunststoffpulver,
   und
(c) Calciumcarbonat, Graphit, Graphen, Lignin, Lignocellulose, Metallhydroxide, bevorzugt Aluminiumhydroxid und/oder Magnesiumhydroxid, Metallcarbonate, bevorzugt Calciumcarbonat, Magensiumcarbonat, Bariumcarbonat und/oder Zinkcarbonat, Metalloxide, bevorzugt Aluminiumoxid und/oder Zinkoxid und/oder Metallpulver, bevorzugt Zink.

Auch dies entspricht einer besonders bevorzugten Ausführungsform der Erfindung.

Es können ein oder mehrere der erfindungsgemäßen Feststoffe, insbesondere wie zuvor beschrieben, eingesetzt werden, d.h. es können auch beliebige Mischungen solcher Feststoffe eingesetzt werden.

Der mindestens eine Feststoff ist insbesondere pulverförmig. Dies entspricht einer besonders bevorzugten Ausführungsform der Erfindung. Bevorzugte Teilchengrößen werden weiter unten angegeben.

Feste Flammschutzmittel, die für die Anwendung in Phenolschäumen bevorzugt einsetzbar sind, sind ebenfalls an sich bekannt und die vorliegende Erfindung ist in der Auswahl fester Flammschutzmittel auch nicht eingeschränkt. Es entspricht jedoch einer bevorzugten Ausführungsform der Erfindung, wenn bestimmte feste Flammschutzmittel, insbesondere solche wie zuvor genannt, in der erfindungsgemäßen Zusammensetzung zum Einsatz gelangen. Es können ein oder mehrere feste Flammschutzmittel eingesetzt werden, d.h. es können auch beliebige Mischungen davon eingesetzt werden. Ganz besonders bevorzugt ist der Einsatz von rotem Phosphor und/oder Ammoniumpolyphosphat.

Wenn in der erfindungsgemäßen Zusammensetzung roter Phosphor und/oder Ammoniumpolyphosphat als festes Flammschutzmittel enthalten ist, dann liegt eine besonders bevorzugte Ausführungsform der Erfindung vor.

Wenn in der erfindungsgemäßen Zusammensetzung mindestens ein Kunststoffpulver enthalten ist, wobei das mindestens eine Kunststoffpulver aus mindestens einem Kunststoff, ausgewählt aus der Gruppe bestehend aus Polyethylen, Polypropylen, Polyamid, wie insbesondere PA6, PA6.6, PA10, PA11 und/oder PA12, Polyester, wie insbesondere Polyethylenterephthalat, Polybutylenterephthalat und/oder Poly-ε-Caprolacton, Polystyrol, Polyacrylat, Polymethylmethacrylat, Polycarbonat, Styrol-Acrylnitril-Copolymere, Polyether, Polymilchsäure, Polyurethan, Phenolharz, Phenolschaum, Polysulfon, Polyethersulfon, Polyetherimid und Polyimid oder Mischungen davon, besteht, wobei das Kunststoffpulver besonders bevorzugt aus Abfallkunststoffen, insbesondere bevorzugt aus Phenolharz- und/oder Phenolschaum-Abfallkunststoffen gebildet sein kann, so liegt eine weitere besonders bevorzugte Ausführungsform der Erfindung vor.

Es können ein oder mehrere Kunststoffpulver, insbesondere wie zuvor beschrieben, eingesetzt werden, d.h. es können auch beliebige Mischungen solcher Kunststoffpulver eingesetzt werden.

Ein Abfallkunststoff ist insbesondere ein Kunststoff, welcher
(i) aus Produktionsabfällen resultiert, die während der Kunststoffherstellung erhalten werden, wie zum Beispiel Schnittreste, Sägeabfall oder Material, welches die Qualitätskontrolle nicht besteht, und/oder
(ii) aus Kunststoffen resultiert, die das Ende ihrer Lebensdauer erreicht haben, wie zum Beispiel Kunststoffe auf Basis von Phenolschäumen aus gebrauchten Dämmmaterialien bzw. Dämmplatten, oder anderweitige gebrauchte Kunststoffbauteile und Kunststoffhalbzeuge.

Wiederum liegt dann eine weitere besonders bevorzugte Ausführungsform der Erfindung vor, wenn in der erfindungsgemäßen Zusammensetzung ein oder mehrere Kunststoffpulver aus Abfallkunststoffen, bevorzugt aus Phenolharz Abfallkunststoffen, insbesondere bevorzugt aus Phenolschaum- Abfallkunststoffen, enthalten sind.

Eine weitere besonders bevorzugte Ausführungsform der Erfindung liegt dann vor, wenn die erfindungsgemäße Zusammensetzung sich dadurch auszeichnet, dass es sich bei dem oder den Feststoff(en) um ein Pulver, bevorzugt mit einem mittleren Partikeldurchmesser von < 500 µm, vorzugsweise < 250 µm, insbesondere bevorzugt < 150 µm handelt, vorzugsweise bestimmt als volumenbasierter Medianwert mittels Laserbeugungsspektroskopie nach ISO 13320:2020. Der mittlere Durchmesser der Partikel wird dabei in Anlehnung an ISO 13320:2020 mittels Laserbeugungsspektroskopie bestimmt. Angaben zum mittleren Durchmesser (d.h. zum mittleren Partikeldurchmesser) entsprechen dem volumenbasierten Medianwert, geben also den Durchmesser einer volumenäquivalenten Kugel an, gegenüber dem 50% der Partikel kleiner und 50% der Partikel größer sind.

Wenn eine erfindungsgemäße Zusammensetzung sich dadurch auszeichnet, dass das mindestens eine Tensid aus der Gruppe der quartären silizium-freien Ammoniumverbindungen in einer Gesamtmenge von 0,1 bis 20 Gewichtsteile, vorzugsweise 0,1 bis 15 Gewichtsteile, besonders bevorzugt 0,1 bis 10 Gewichtsteile, bezogen auf 100 Gewichtsteile des gesamt eingesetzten Phenolharzes, enthalten ist, so liegt eine weitere besonders bevorzugte Ausführungsform der Erfindung vor.

Gemäß einer weiteren bevorzugten Ausführungsform der Erfindung ist der mindestens eine Feststoff in der erfindungsgemäßen Zusammensetzung in einer Gesamtmenge von 1 bis 100 Gewichtsteilen, vorzugsweise 1 bis 60 Gewichtsteilen, besonders bevorzugt 5 bis 50 Gewichtsteilen, bezogen auf 100 Gewichtsteile des gesamt eingesetzten Phenolharzes enthalten.

Wenn die erfindungsgemäße Zusammensetzung sich dadurch auszeichnet, dass zusätzlich alkoxyliertes, bevorzugt ethoxyliertes, Rizinusöl in einer Gesamtmenge von 0,5 bis 10 Gewichtsteilen, vorzugsweise 1 bis 8 Gewichtsteilen, bezogen auf 100 Gewichtsteile des gesamt eingesetzten Phenolharzes, enthalten ist, und/oder
dass zusätzlich mindestens ein Polyethersiloxan, in einer Menge von 0,5 bis 10 Gewichtsteile, bezogen auf 100 Gewichtsteile des gesamt eingesetzten Phenolharzes, enthalten ist, so handelt es sich um eine weitere bevorzugte Ausführungsform der Erfindung.

Polyethersiloxane, auch Polyether-modifizierte Siloxane (PES) genannt, sind an sich bekannt und werden weiter unten beschrieben.

Wenn die erfindungsgemäße Zusammensetzung sich dadurch auszeichnet, dass das mindestens eine Treibmittel ausgewählt ist aus der Gruppe bestehend aus
- Kohlenwasserstoffen mit 3, 4 oder 5 Kohlenstoff-Atomen, bevorzugt cyclo-, iso- und/oder n-Pentan,
   und
- halogenierten Kohlenwasserstoffen mit 3, 4 oder 5 Kohlenstoff-Atomen, bevorzugt Hydrofluoroolefine und/oder Hydrohaloolefine, weiter bevorzugt 1234ze, 1234yf, 1224yd, 1233zd(E) und/oder 1336mzz,
so liegt eine weitere bevorzugte Ausführungsform der Erfindung vor.

Es können ein oder mehrere Treibmittel, insbesondere wie zuvor beschrieben, eingesetzt werden, d.h. es können auch beliebige Mischungen von Treibmitteln eingesetzt werden.

Ein weiterer Gegenstand der Erfindung ist ein Verfahren zur Herstellung von Phenolschaum unter Einsatz einer Reaktionsmischung, enthaltend eine Zusammensetzung umfassend mindestens ein Phenolharz, mindestens ein Treibmittel, mindestens einen Katalysator, mindestens einen Feststoff, wobei die Zusammensetzung mindestens ein Tensid, ausgewählt aus der Gruppe der quartären silizium-freien Ammoniumverbindungen, wie z.B. Esterquat oder Alkylquat oder Amidoaminquat oder Imidazoliniumquat, enthält, insbesondere wie zuvor in den bevorzugten Ausführungsformen näher beschrieben.

Eine besonders bevorzugte Phenolschaum-Formulierung im Sinne dieser Erfindung ergibt ein Raumgewicht von 5 bis 900 kg/m³ und hat vorzugweise die in Tabelle 1 genannte Zusammensetzung, die einer bevorzugten Ausführungsform der Erfindung entspricht:

**Tabelle 1: Zusammensetzung einer bevorzugten Phenolschaumformulierung**

| **Komponente** | **Gewichtsteile** |
|---|---|
| Phenolharz | 80 bis 120 |
| Tensid(e) aus der Gruppe der quartären silizium-freien Ammoniumverbindungen, vorzugsweise nach Formel (1), (2), (3), (4) und/oder (5) | 0,1 bis 20 |
| Feststoff | 1 bis 100 |
| Treibmittel | >0 bis 50 |
| Katalysator | 1 bis 30 |
| Schaumstabilisatoren, die keine Tensid(e) aus der Gruppe der quartären silizium-freien Ammoniumverbindungen sind | >0 bis 15 |
| Optional weitere Additive | 0 bis 100 |

Für weitere bevorzugte Ausführungsformen und Ausgestaltungen des erfindungsgemäßen Verfahrens sei außerdem auf die zuvor bereits im Zusammenhang mit der erfindungsgemäßen Zusammensetzung gemachten Ausführungen verwiesen.

Ein weiterer Gegenstand der vorliegenden Erfindung ist ein Phenolschaum, hergestellt gemäß des zuvor genannten erfindungsgemäßen Verfahrens, insbesondere unter Einsatz einer erfindungsgemäßen Zusammensetzung.

Ein weiterer Gegenstand der vorliegenden Erfindung betrifft die Verwendung von erfindungsgemäßem Phenolschaum, wie zuvor genannt, als Material zur thermischen Isolation, vorzugsweise als Dämmplatte oder Sandwichelement.

Eine besonders bevorzugte erfindungsgemäße Zusammensetzung enthält die folgenden Bestandteile:
- mindestens ein Phenolharz,
- mindestens ein Tensid, ausgewählt aus der Gruppe der quartären silizium-freien Ammoniumverbindungen, insbesondere wie oben mit Formel (1), (2), (3), (4) und/oder (5) definiert und/oder Cetylpyridiniumchlorid
- mindestens ein Treibmittel,
- mindestens ein Katalysator,
- mindestens ein Schaumstabilisator, welcher kein Tensid aus der Gruppe der quartären silizium-freien Ammoniumverbindungen ist
- mindestens ein Feststoff
- optional weitere Additive, etc.

Die Herstellung von Phenolschäumen (diese werden synonym, auch im Rahmen dieser Erfindung, als Phenolharzschäume bezeichnet) ist an sich bekannt. Zur Herstellung von Phenolschäumen können eine oder mehrere Phenolharze, vorzugsweise eine oder mehrere sogenannte Resolharze, verwendet werden. Entsprechend einsetzbare Phenolharze, vorzugsweise Resolharze, sind an sich bekannt. Insbesondere können sie in bekannter Weise z.B. durch Kondensation von Phenol oder einer phenolbasierten Verbindung wie zum Beispiel Kresol, Xylenol, para-Alkylphenol, para-Phenylphenol, Resorcin oder dergleichen und einem Aldehyd wie zum Beispiel Formaldehyd, Furfural, Acetaldehyd oder dergleichen unter vorzugsweise basischen Bedingungen, zum Beispiel durch Einsatz einer katalytische Menge an Alkalihydroxiden, wie z.B. Natriumhydroxid, Kaliumhydroxid oder Calciumhydroxid oder einem aliphatischen Amin, wie z.B. Trimethylamin oder Triethylamin, bevorzugt mit einem Überschuss an Aldehyd hergestellt werden. Dies stellt den üblichen Weg zur Herstellung von Phenolharzen, vorzugsweise Resolharzen dar, wobei die Erfindung nicht nur auf die gerade zuvor aufgeführten Chemikalien beschränkt ist.

Das molare Verhältnis von Phenolgruppen zu Aldehydgruppen unterliegt dabei keiner Beschränkung. Bevorzugt liegt das Verhältnis in einem Bereich von 1:1 bis 1:3, besonders bevorzugt in einem Bereich von 1:1,5 bis 1:2,5. Vorzugsweise, aber nicht beschränkt darauf, hat das Phenolharz einen freien Aldehydgehalt von 0,1 Gew.% bis 0,5 Gew.%. Dieser kann mittels potentiometrischer Titration nach ISO 11402:2004 mit Hydroxylaminhydrochlorid bestimmt werden.

Bevorzugt einsetzbare Phenolharze, die bei der Schaumherstellung verwendet werden können, sind bei 25 °C und Normaldruck Flüssigkeiten, und zwar vorzugsweise mit Wasserkonzentrationen von etwa 1 bis 25 Gew.-%, bevorzugt 5 bis 20 Gew.-%, und verfügen über Methylolgruppen als reaktive Substituenten, wie beispielsweise in EP 0170357 B1 beschrieben. Sofern gewünscht, kann die Viskosität des Phenolharzes unter anderem durch den Wassergehalt eingestellt werden. So führen hohe Wassergehalte gewöhnlich zu einer niedrigeren Viskosität und erleichtern so die Handhabung des Harzes als auch das Mischen währen der Schaumherstellung.

Die Viskosität bevorzugt einsetzbarer Phenolharze bei 25 °C und Normaldruck liegt vorzugsweise in einem Bereich von 1000 bis 28000 mPa*s und kann durch die üblichen dem Fachmann bekannten Methoden wie z.B. mittels Brookfield Viskometer bestimmt werden. Grundsätzliches zur Herstellung und Zusammensetzung von Phenolharzen ist dem Stand der Technik entnehmbar und insbesondere z.B. in EP 3830174 A1, EP 2898005 A1, WO 2022043561 A1 oder EP 4073155 A1, beschrieben.

Erfindungsgemäße Tenside aus der Gruppe der quartären silizium-freien Ammoniumverbindungen, insbesondere wie oben mit Formel (1), (2), (3), (4) und/oder (5) definiert und/oder Cetylpyridiniumchlorid, wurden bereits weiter oben beschrieben.

Treibmittel und deren Einsatz bei der Herstellung von Phenolschäumen sind dem Fachmann bekannt. Die Verwendung von einem oder mehreren Treibmitteln ist grundsätzlich abhängig von der

Art des Systems und der Anwendung des erhaltenen Phenolschaums. Je nach Menge des verwendeten Treibmittels kann ein Schaum mit hoher oder niedriger Dichte hergestellt werden. So können Schäume mit Dichten von vorzugsweise 5 kg/m³ bis 900 kg/ m³, bevorzugt 5 bis 500 kg/ m³, besonders bevorzugt 10 bis 200 kg/m³, insbesondere 12 bis 100 kg/m³ nach ASTM D1622-20 hergestellt werden.

Als Treibmittel können eine oder mehrere der entsprechenden Verbindungen mit passenden Siedepunkten, wie z.B. Kohlenwasserstoffe mit 3, 4 oder 5 Kohlenstoffatomen, bevorzugt cyclo-, iso-oder n-Pentan, halogenierte Kohlenwasserstoffe wie zum Beispiel chlorierte Kohlenwasserstoffe wie Dichlorethan, 1,2-Dichlorethen, n-Propylchlorid, Isopropylchlorid, Butylchlorid, Isobutylchlorid, Pentylchlorid, Isopentylchlorid, 1,1-Dichlorethen, Trichlorethen oder Chlorethen oder Fluorkohlenwasserstoffe (HFC), wie zum Beispiel HFC 245fa, HFC 134a oder HFC 365mfc, Hydrofluoroolefine (HFO) oder Hydrohaloolefine, bevorzugt 1234ze, 1234yf, 1224yd, 1233zd(E) oder 1336mzz sowie deren Mischungen eingesetzt werden.

Katalysatoren, die für die Herstellung von Phenolschäumen einsetzbar sind, sind dem Fachmann aus dem Stand der Technik bekannt und beispielsweise in EP 0170 357 A1 oder in DE 602004006376 T2 beschrieben. Hierbei kann vorzugsweise auf die üblichen aus dem Stand der Technik bekannten organischen und anorganischen Säuren zurückgegriffen werden. Es können eine oder mehrere Säuren eingesetzt werden. Besonders bevorzugt einsetzbar sind Schwefelsäure, Phosphorsäure, Benzolsulfonsäure, Xylolsulfonsäure, para-Toluolsulfonsäure, Ethylbenzolsulfonsäure, Naphtolsulfonsäure, Cumolsulfonsäure und/oder Phenolsulfonsäure. Insbesondere können als Katalysatoren Gemische mehrerer dieser Verbindungen eingesetzt werden. Die bevorzugte Einsatzmenge der Katalysatoren für eine vollständige Reaktion wird unter anderem durch den Wassergehalt des Phenolharzes und/oder wenn der Katalysator als wässrige Lösung vorliegt auch durch dessen Wassergehalt beeinflusst. Beispielsweise kann bei höherem Wassergehalt eine höhere Säurekonzentration erforderlich sein.

Phenolschaum kann auf bekannte Weise, also insbesondere durch Reaktion einer Mischung umfassend Phenolharz, Treibmittel, Schaumstabilisator und Katalysator gebildet werden. Bei Zugabe eines Katalysators zu einem Gemisch aus Phenolharz, Treibmittel und Schaumstabilisator kommt es zu einer exothermen Reaktion zwischen den Methylolgruppen und Phenol, was zur Bildung von Methylenbrücken und zur Vernetzung führt. Dabei wird durch die Kondensation Wasser freigesetzt. Die Art und Menge der eingesetzten Säure, die Eigenschaften des Treibmittels und die Struktur des Schaumstabilisators beeinflussen dabei die Exothermie der Reaktion und die Schaumbildung.

Schaumstabilisatoren und deren Einsatz bei der Herstellung von Phenolschäumen sind dem Fachmann, wie oben beschrieben, allgemein bekannt. So wird beispielsweise in EP 3830174 A1 der Einsatz von ethoxylierten Rizinusöl und in WO 2022043561 A1 der Einsatz von ethoxylierten Rizinusöl und Polyether-modifizierten Siloxanen beschrieben. Der Einsatz von ethoxylierten Rizinusöl sowie der Einsatz von ethoxylierten Rizinusöl und Polyether-modifizierten Siloxanen entsprechen bevorzugten Ausführungsformen der Erfindung.

Feststoffe wurden bereits weiter oben beschrieben.

Als optionale Additive können eine oder mehrere der nach dem Stand der Technik bekannten Substanzen verwendet werden, die bei der Herstellung von Phenolschäumen üblicherweise Verwendung finden, wie zum Beispiel Viskositätserniedriger, Weichmacher, Härter, flüssige Flammschutzmittel, zellverfeinernde Additive, Farbstoffe, und/oder Duftstoffe. Geeignete optionale Additive sind zum Beispiel in EP 3830174 A1, US 4444912 A sowie EP 1922357 A1 beschrieben.

Zur Verringerung der Viskosität des Phenolharzes können zum Beispiel Monoethylenglykol oder Polyesterpolyole eingesetzt werden. Als Härter können zum Beispiel Verbindungen mit Aminogruppen wie Harnstoff oder Dicyandiamid eingesetzt werden. Vorzugsweise wird Harnstoff eingesetzt. Diese können bei der Verschäumung als auch bereits bei der Herstellung des Phenolharzes eingesetzt werden.

Das erfindungsgemäße Verfahren zur Herstellung von Phenolschäumen kann nach allen bekannten Methoden durchgeführt werden. Diese sind dem Fachmann bekannt und z.B. in EP 3830174 A1 beschrieben.

Wenn aus dieser Beschreibung nichts anderes hervorgeht, dann kann jegliche bevorzugte oder besonders bevorzugte Ausführungsform der Erfindung mit einer oder mehreren der übrigen bevorzugten oder besonders bevorzugten Ausführungsformen der Erfindung kombiniert werden.

Die erfindungsgemäßen Gegenstände sind nachfolgend beispielhaft beschrieben, ohne dass die Erfindung, deren Anwendungsbreite sich aus der gesamten Beschreibung und den Ansprüchen ergibt, auf diese beispielhaften Ausführungsformen beschränkt sein soll. Sind Bereiche, allgemeine Formeln oder Verbindungsklassen angegeben, so sollen diese nicht nur die entsprechenden Bereiche oder Gruppen von Verbindungen umfassen, die explizit erwähnt sind, sondern auch alle Teilbereiche und Teilgruppen von Verbindungen, die durch Herausnahme von einzelnen Werten (Bereichen) oder Verbindungen erhalten werden können. Werden im Rahmen der vorliegenden Beschreibung Dokumente zitiert, so soll deren Inhalt, insbesondere in Bezug auf den Sachverhalt, in dessen Zusammenhang das Dokument zitiert wurde, vollständig zum Offenbarungsgehalt der vorliegenden Erfindung gehören. Bei Prozentangaben handelt es sich, wenn nicht anders angegeben, um Angaben in Gewichtsprozent. Werden Mittelwerte angegeben, so handelt es sich, wenn nicht anders angegeben, um Zahlenmittel. Werden Parameter angegeben, die durch Messung bestimmt wurden, so wurden die Messungen, wenn nicht anders angegeben, bei einer Temperatur von 23 °C und Normaldruck durchgeführt.

### Beispiele:

### Beispiel 1: Herstellung des Phenolschaums

Für den anwendungstechnischen Vergleich wurden die Formulierungen in Tabelle 2 und die Dispergiermittel in Tabelle 3 gewählt.

Die Durchführung der Vergleichsverschäumungen erfolgte im Handmischverfahren. Dazu wurden Phenolharz (Ansatzmenge 180 ± 5 g), Schaumstabilisatoren, Dispergiermittel und Feststoff in einen Becher eingewogen und mit einem Tellerrührer (6 cm Durchmesser) 15 min bei 20 °C und 500 rpm vermischt. Danach wurde das Treibmittel zugegeben, für 30 s bei 1500 rpm vermischt und anschließend auf 18 °C gekühlt. Anschließend wurde die Säure zugegeben und die Mischung bei 2000 rpm für 45 s verrührt und in eine auf 50 °C thermostatisierte Aluminiumform von 25 cm x 25 cm x 7 cm Größe überführt, welche mit Polyethylenfolie ausgekleidet war. Nach 1 h wurden die Schaumstoffe entformt und 18 h in einem auf 60 °C beheizten Ofen ausgehärtet.

**Tabelle 2: Formulierung zur Herstellung von Phenolschaum. Mengenangaben in Gewichtsteilen.**

| **Komponente** | **Rezeptur A** | **Rezeptur B** | **Rezeptur C** | **Rezeptur D** | **Rezeptur E** |
|---|---|---|---|---|---|
| Phenolharz* | 100 | 100 | 100 | 100 | 100 |
| TAGAT^{®} CH 40** | 3 | 3 | 3 | 3 | 3 |
| TEGOSTAB^{®} B 84905*** | 2 | 2 | 2 | 2 | 2 |
| Dispergiermittel | 5 | 2 | 2 | 8 | 2 |
| Roter Phosphor | 10 | | | | |
| Ammoniumpolyphosphat | | 10 | | | |
| Melamin | | | 10 | | |
| Phenolschaum-Rezyklat**** | | | | 5 | |
| Lignin aus Hartholz | | | | | 10 |
| Cyclo- / Isopentan 85/15 | 10 | 10 | 10 | 10 | 10 |
| p-Toluolsulfonsäure 65% in Wasser | 18 | 18 | 18 | 18 | 18 |

| | | | | | |
|---|---|---|---|---|---|
| * Phenolharz Cellobond^{®} J6014L der Firma Bakelite ** Schaumstabilisator der Firma Evonik Operations GmbH *** Schaumstabilisator der Firma Evonik Operations GmbH **** Mittels Stiftmühle gemahlene Phenolschaumdämmplatte (Kryogenmahlung mit flüssigem Stickstoff, Umfanggeschwindigkeit 120 m/s) | | | | | |

**Tabelle 3: Untersuchte Verbindungen**

| **Name** | **Typ** | **Zusammensetzung** |
|---|---|---|
| Verbindung 1 | Esterquat | Dimethyl, diisopropyl-esterquat von Isostearinsäure und Ölsäure (Methylsulfat) |
| Verbindung 2 | Esterquat | Methyl, hydroxyethyl, dihydroxyethyloleat esterquat (Methylsulfat) |
| Verbindung 3 | Esterquat | Methyl, hydroxyethyl, dihydroxyethyltallowat esterquat (Methylsulfat) |
| Verbindung 4 | Esterquat | Methyl, hydroxyethyl, dihydroxyethylpalmeat esterquat (Methylsulfat) |
| Verbindung 5 | Esterquat | Dimethyl, dihydroxyethyltallowat esterquat (Chlorid) |
| Verbindung 6 | Alkylquat | Behenyl (C22) trimethylammoniumchlorid |
| Verbindung 7 | Alkylquat | Distearyl dimethylammoniumchlorid |
| Verbindung 8 | Alkylquat | Ethyl-Bis-(polyethylenglycol)tallyl-ammoniumethylsulfat (Total 10 EO Einheiten) |
| Verbindung 9 | Alkylquat | Methyl-Bis-(Polyethylenoxid)coco-ammoniumchlorid (Total 15 EO Einheiten) |
| Verbindung 10 | Alkylquat | Methyl-Bis-(Polyethylenoxid)coco-ammoniummethylsulfat (Total 5 EO Einheiten) |
| Verbindung 11 | Imidazoliniumquats | Dioleyl imidazoliniumquat (Methylsulfat, R⁷=Methyl, e=2, Z=N) |
| Verbindung 12 | Imidazoliniumquats | Dipalmityl imidazoliniumquat (Methylsulfat, R⁷=Methyl, e=2, Z=N) |
| Verbindung 13 | Amidoaminquat | Methyl, polyethylenoxid, dipalmstearin amidoaminquat (f=0, 3,5 EO, Methylsulfat) |
| Verbindung 14 | Amidoaminquat | Methyl, polyethylenoxid, diisostearin amidoaminquat (f=0, 3,0 EO, Methylsulfat) |
| Cetylpyridinumchlorid | - | - |
| TEGOPREN^{®} 6921 | Silikonquat | Nicht erfindungsgemäß |
| TEGOTEX^{®} 8080 | Silikonquat | Nicht erfindungsgemäß |
| TEGO^{®} Dispers 652 | Modifizierte Derivate auf Basis von Tallöl | Nicht erfindungsgemäß |

Oberfläche und Porenstruktur wurden subjektiv anhand einer Skala von 1 bis 10 beurteilt, wobei 10 einen (idealisierten) ungestörten, sehr feinen Schaum und 1 einen extrem stark gestörten, groben Schaum repräsentiert. Die Wärmeleitzahl (λ-Wert in mW/m·K) wurde an 2,5 cm dicken Scheiben mit einem Gerät vom Typ Hesto Lambda Control, Modell HLC X206 bei einer mittleren Temperatur von 10°C entsprechend den Vorgaben der Norm EN12667:2001 gemessen. Die Dichte wurde entsprechend ASTM D1622-20 bestimmt.

Die Ergebnisse sind in den Tabellen 4 bis 8 dargestellt.

**Tabelle 4: Schaumeigenschaften Phenolschaum der Rezeptur A.**

| **Verbindung** | **Dichte in kg/m³** | **λ-Wert in mW/m·K** | **Zellstruktur Oberfläche** | **Zellstruktur Innenstörungen** |
|---|---|---|---|---|
| Ohne Dispergieradditiv | 39,4 | 23,9 | 6,0 | 6,0 |
| Verbindung 1 | 39,1 | 22,9 | 7,0 | 7,0 |
| Verbindung 2 | 38,8 | 22,9 | 7,0 | 6,5 |
| Verbindung 3 | 39,4 | 22,8 | 6,5 | 6,5 |
| Verbindung 4 | 39,5 | 23,4 | 6,5 | 6,0 |
| Verbindung 5 | 39,8 | 23,8 | 6,5 | 6,5 |
| Verbindung 6 | 39,2 | 21,9 | 7,0 | 7,5 |
| Verbindung 7 | 38,4 | 22,8 | 7,0 | 7,0 |
| Verbindung 8 | 40,0 | 23,0 | 6,5 | 7,0 |
| Verbindung 9 | 39,4 | 23,1 | 7,5 | 7,0 |
| Verbindung 10 | 39,1 | 23,3 | 6,5 | 6,5 |
| Verbindung 11 | 39,8 | 22,9 | 6,5 | 7,0 |
| Verbindung 12 | 39,5 | 23,7 | 6,5 | 6,5 |
| Verbindung 13 | 39,7 | 22,8 | 7,0 | 7,0 |
| Verbindung 14 | 39,2 | 23,0 | 6,5 | 7,0 |
| Cetylpyridinumchlorid | 40,1 | 23,9 | 6,0 | 6,0 |
| TEGOPREN^{®} 6921 | 48,1 | > 28 | 3,0 | 3,0 |
| TEGOTEX^{®} 8080 | 50,2 | > 28 | 2,0 | 2,0 |
| TEGO@ Dispers 652 | 39,7 | 24,2 | 5,5 | 5,0 |

**Tabelle 5: Schaumeigenschaften Phenolschaum der Rezeptur B.**

| **Verbindung** | **Dichte in kg/m³** | **λ-Wert in mW/m·K** | **Zellstruktur Oberfläche** | **Zellstruktur Innenstörungen** |
|---|---|---|---|---|
| Ohne Dispergieradditiv | 39,0 | 23,4 | 5,5 | 6,0 |
| Verbindung 1 | 38,9 | 23,0 | 7,0 | 7,0 |
| Verbindung 2 | 38,9 | 23,1 | 6,0 | 6,0 |
| Verbindung 3 | 38,1 | 23,0 | 6,5 | 6,5 |
| Verbindung 4 | 38,8 | 23,3 | 7,0 | 6,5 |
| Verbindung 5 | 38,2 | 22,5 | 6,0 | 6,0 |
| Verbindung 6 | 38,1 | 22,8 | 6,5 | 6,5 |
| Verbindung 7 | 38,4 | 22,4 | 6,5 | 6,5 |
| Verbindung 8 | 38,5 | 22,9 | 7,0 | 6,5 |
| Verbindung 9 | 38,4 | 22,1 | 7,0 | 7,0 |
| Verbindung 10 | 38,7 | 23,3 | 6,0 | 6,5 |
| Verbindung 11 | 37,9 | 23,0 | 6,5 | 6,5 |
| Verbindung 12 | 38,7 | 22,8 | 7,0 | 7,0 |
| Verbindung 13 | 38,8 | 22,7 | 6,5 | 7,0 |
| Verbindung 14 | 38,5 | 23,1 | 6,0 | 7,0 |
| Cetylpyridinumchlorid | 39,2 | 24,2 | 5,5 | 6,0 |
| TEGOPREN^{®} 6921 | 43,7 | > 28 | 4,0 | 4,0 |
| TEGOTEX^{®} 8080 | 47,6 | > 28 | 3,0 | 2,0 |
| TEGO^{®} Dispers 652 | 40,0 | 23,9 | 5,0 | 5,5 |

**Tabelle 6: Schaumeigenschaften Phenolschaum der Rezeptur C.**

| **Verbindung** | **Dichte in kg/m³** | **λ-Wert in mW/m·K** | **Zellstruktur Oberfläche** | **Zellstruktur Innenstörungen** |
|---|---|---|---|---|
| Ohne Dispergieradditiv | 38,1 | 23,0 | 6,5 | 6,0 |
| Verbindung 1 | 38,2 | 21,6 | 7,0 | 6,5 |
| Verbindung 2 | 38,0 | 22,2 | 6,5 | 6,5 |
| Verbindung 3 | 37,8 | 22,4 | 6,5 | 6,5 |
| Verbindung 4 | 37,4 | 22,6 | 7,5 | 7,5 |
| Verbindung 5 | 38,0 | 21,9 | 6,0 | 7,0 |
| Verbindung 6 | 38,2 | 22,8 | 7,0 | 6,5 |
| Verbindung 7 | 37,6 | 22,1 | 7,0 | 6,5 |
| Verbindung 8 | 37,9 | 22,4 | 7,5 | 6,5 |
| Verbindung 9 | 37,4 | 22,3 | 7,5 | 6,5 |
| Verbindung 10 | 38,0 | 22,7 | 6,5 | 6,5 |
| Verbindung 11 | 38,1 | 21,5 | 7,5 | 7,0 |
| Verbindung 12 | 37,8 | 21,8 | 7,0 | 7,5 |
| Verbindung 13 | 37,5 | 22,0 | 7,0 | 7,0 |
| Verbindung 14 | 37,4 | 22,5 | 6,5 | 7,0 |
| Cetylpyridinumchlorid | 38,2 | 22,8 | 6,5 | 6,5 |
| TEGOPREN^{®} 6921 | 42,4 | > 28 | 3,0 | 3,0 |
| TEGOTEX^{®} 8080 | 46,0 | > 28 | 3,0 | 3,0 |
| TEGO^{®} Dispers 652 | 39,7 | 24,5 | 5,5 | 5,0 |

**Tabelle 7: Schaumeigenschaften Phenolschaum der Rezeptur D.**

| **Verbindung** | **Dichte in kg/m³** | **λ-Wert in mW/m·K** | **Zellstruktur Oberfläche** | **Zellstruktur Innenstörungen** |
|---|---|---|---|---|
| Ohne Dispergieradditiv | 38,5 | 24,1 | 6,5 | 6,5 |
| Verbindung 1 | 38,5 | 23,5 | 7,0 | 7,0 |
| Verbindung 2 | 38,7 | 23,4 | 7,0 | 6,5 |
| Verbindung 3 | 38,0 | 23,9 | 7,5 | 7,5 |
| Verbindung 4 | 38,4 | 23,5 | 6,5 | 7,0 |
| Verbindung 5 | 38,0 | 24,0 | 6,5 | 6,5 |
| Verbindung 6 | 38,2 | 23,5 | 7,0 | 7,5 |
| Verbindung 7 | 37,8 | 23,2 | 7,0 | 7,5 |
| Verbindung 8 | 38,7 | 23,7 | 6,5 | 7,0 |
| Verbindung 9 | 37,9 | 24,0 | 7,0 | 7,0 |
| Verbindung 10 | 39,0 | 23,5 | 6,5 | 7,0 |
| Verbindung 11 | 37,4 | 23,0 | 7,0 | 7,5 |
| Verbindung 12 | 38,2 | 22,8 | 7,0 | 8,0 |
| Verbindung 13 | 38,4 | 24,0 | 6,5 | 6,5 |
| Verbindung 14 | 38,0 | 23,7 | 7,0 | 6,5 |
| Cetylpyridinumchlorid | 39,2 | 24,1 | 6,5 | 6,5 |
| TEGOPREN^{®} 6921 | 42,1 | >28 | 2,0 | 2,0 |
| TEGOTEX^{®} 8080 | 45,9 | >28 | 3,0 | 4,0 |
| TEGO^{®} Dispers 652 | 39,9 | 26,6 | 5,5 | 6,0 |

**Tabelle 8: Schaumeigenschaften Phenolschaum der Rezeptur E.**

| **Verbindung** | **Dichte in kg/m³** | **λ-Wert in mW/m·K** | **Zellstruktur Oberfläche** | **Zellstruktur Innenstörungen** |
|---|---|---|---|---|
| Ohne Dispergieradditiv | 40,7 | 24,5 | 5,0 | 6,0 |
| Verbindung 1 | 39,7 | 24,0 | 6,0 | 6,5 |
| Verbindung 2 | 40,2 | 23,8 | 6,0 | 6,5 |
| Verbindung 3 | 40,1 | 23,7 | 6,0 | 7,0 |
| Verbindung 4 | 39,8 | 23,9 | 5,5 | 6,5 |
| Verbindung 5 | 40,0 | 24,0 | 6,0 | 6,5 |
| Verbindung 6 | 40,5 | 24,2 | 6,5 | 6,5 |
| Verbindung 7 | 40,0 | 23,7 | 6,0 | 6,5 |
| Verbindung 8 | 40,4 | 23,5 | 6,5 | 7,0 |
| Verbindung 9 | 39,8 | 24,0 | 6,0 | 6,5 |
| Verbindung 10 | 39,6 | 23,1 | 6,5 | 7,5 |
| Verbindung 11 | 40,6 | 23,0 | 6,5 | 7,5 |
| Verbindung 12 | 40,1 | 24,2 | 6,5 | 6,5 |
| Verbindung 13 | 40,0 | 24,0 | 5,5 | 6,0 |
| Verbindung 14 | 39,7 | 23,9 | 5,5 | 6,5 |
| Cetylpyridinumchlorid | 41,0 | 24,4 | 6,0 | 6,0 |
| TEGOPREN^{®} 6921 | 45,4 | >28 | 3,0 | 3,0 |
| TEGOTEX^{®} 8080 | 46,4 | >28 | 3,0 | 3,0 |
| TEGO^{®} Dispers 652 | 42,1 | 25,7 | 4,5 | 5,0 |

Die Ergebnisse zeigen, dass die nicht-erfindungsgemäßen Dispergiermittel beim Einsatz von Feststoffen zu einem deutlich schlechterem Eigenschaftsprofil führen, insbesondere zu einer höheren thermischen Leitfähigkeit und einer schlechteren Oberfläche. Mit den erfindungsgemäßen Dispergiermitteln kann dagegen das Eigenschaftsprofil gegenüber nicht-erfindungsgemäßen Dispergiermitteln signifikant verbessert werden.

### Beispiel 2: Dispergierverhalten

Für den anwendungstechnischen Vergleich wurden die in Tabelle 9 dargestellten Formulierungen verwendet. Dazu wurden Phenolharz und Dispergiermittel eingewogen (Ansatzgröße 250 g) und mit einem Tellerrührer (6 cm Durchmesser) 30 s bei 1000 Upm vermischt. Anschließend wurde der Feststoff, bei weiterhin laufendem Tellerrührer (2000 Upm), zugegeben und für weitere 45 s vermischt. Anschließend wurden die Formulierungen in Glasgefäße gefüllt, verschlossen und die Zeit bis zur vollständigen Sedimentation gemessen.

Nach aufrechter Lagerung für 21 Tage bei Raumtemperatur wurden alle Proben redispergiert und die Redispergierbarkeit anhand einer Skala von 1 bis 3 bewertet. Dabei bedeutet die Note 1, das die Probe bereits durch Einsatz eines elektrischen Laborrührers (300 rpm für 30 s) wieder redispergiert werden konnte. Die Note 2 wurde vergeben, wenn mit 800 rpm für 60s eine Redispergierung erzielt werden konnte. Die Note 3 wurde für Proben vergeben, bei denen sich ein sehr festes, kompaktes Sediment gebildet hat, das nicht durch eine der beiden genannten Methoden redispergiert werden konnte.

**Tabelle 9: Formulierung zur Testung des Dispergierverhaltens. Mengenangaben in Gewichtsteilen.**

| **Komponente** | **Rezeptur F** | **Rezeptur G** | **Rezeptur H** | **Rezeptur I** | **Rezeptur J** |
|---|---|---|---|---|---|
| Phenolharz* | 100 | 100 | 100 | 100 | 100 |
| Dispergiermittel | 5 | 2 | 2 | 8 | 2 |
| Roter Phosphor | 10 | | | | |
| Ammoniumpolyphosphat | | 10 | | | |
| Melamin | | | 10 | | |
| Phenolschaum-Rezyklat** | | | | 10 | |
| Lignin aus Hartholz | | | | | 10 |

| | | | | | |
|---|---|---|---|---|---|
| *Phenolharz Cellobond^{®} J6014L der Firma Bakelite **Mittels Stiftmühle gemahlene Phenolschaumdämmplatte (Kryogenmahlung mit flüssigem Stickstoff, Umfanggeschwindigkeit 120 m/s) | | | | | |

Die Ergebnisse sind in den Tabellen 10 und 11 dargestellt.

**Tabelle 10: Sedimentationsstabilität.**

| **Dispergiermittel** | **Rezeptur F** | **Rezeptur G** | **Rezeptur H** | **Rezeptur I** | **Rezeptur J** |
|---|---|---|---|---|---|
| Ohne Dispergieradditiv | 48 h | 48 h | 48 h | 24 h | 48 h |
| Verbindung 1 | 60 h | 60 h | 48 h | 36 h | 60 h |
| Verbindung 2 | 60 h | 60 h | 60 h | 48 h | 60 h |
| Verbindung 3 | 60 h | 60 h | 60 h | 48 h | 60 h |
| Verbindung 4 | 54 h | 72 h | 60 h | 36 h | 60 h |
| Verbindung 5 | 72 h | 72 h | 72 h | 36 h | 72 h |
| Verbindung 6 | 60 h | 72 h | 60 h | 24 h | 72 h |
| Verbindung 7 | 72 h | 72 h | 96 h | 48 h | 60 h |
| Verbindung 8 | 60 h | 60 h | 96 h | 48 h | 72 h |
| Verbindung 9 | 72 h | 60 h | 72 h | 48 h | 72 h |
| Verbindung 10 | 72 h | 60 h | 72 h | 48 h | 60 h |
| Verbindung 11 | 72 h | 72 h | 72 h | 48 h | 72 h |
| Verbindung 12 | 96 h | 96 h | 96 h | 48 h | 96 h |
| Verbindung 13 | 96 h | 96 h | 96 h | 48 h | 72 h |
| Verbindung 14 | 96 h | 96 h | 96 h | 48 h | 72 h |
| Cetylpyridinumchlorid | 54 h | 54 h | 60 h | 36 h | 54 h |
| TEGOPREN^{®} 6921 | 36 h | 48 h | 36 h | 16 h | 36 h |
| TEGOTEX^{®} 8080 | 36 h | 36 h | 24 h | 24 h | 48 h |
| TEGO^{®} Dispers 652 | 48 h | 48 h | 48 h | 24 h | 48 h |

**Tabelle 11: Redispergierbarkeit.**

| **Dispergiermittel** | **Rezeptur F** | **Rezeptur G** | **Rezeptur H** | **Rezeptur I** | **Rezeptur J** |
|---|---|---|---|---|---|
| Ohne Dispergieradditiv | 3 | 3 | 3 | 2 | 2 |
| Verbindung 1 | 1 | 1 | 2 | 1 | 1 |
| Verbindung 2 | 1 | 1 | 2 | 2 | 1 |
| Verbindung 3 | 1 | 1 | 2 | 2 | 1 |
| Verbindung 4 | 1 | 1 | 2 | 2 | 1 |
| Verbindung 5 | 1 | 1 | 2 | 1 | 1 |
| Verbindung 6 | 2 | 1 | 1 | 1 | 1 |
| Verbindung 7 | 2 | 2 | 1 | 1 | 2 |
| Verbindung 8 | 2 | 2 | 1 | 1 | 2 |
| Verbindung 9 | 1 | 1 | 1 | 2 | 1 |
| Verbindung 10 | 1 | 1 | 1 | 2 | 1 |
| Verbindung 11 | 1 | 1 | 2 | 2 | 1 |
| Verbindung 12 | 1 | 1 | 2 | 1 | 1 |
| Verbindung 13 | 1 | 1 | 1 | 1 | 1 |
| Verbindung 14 | 1 | 1 | 1 | 1 | 1 |
| Cetylpyridinumchlorid | 2 | 2 | 2 | 2 | 1 |
| TEGOPREN^{®} 6921 | 3 | 3 | 3 | 2 | 2 |
| TEGOTEX^{®} 8080 | 3 | 3 | 3 | 2 | 2 |
| TEGO^{®} Dispers 652 | 2 | 2 | 3 | 2 | 2 |

In den untersuchten Fällen konnte eine Verbesserung der Sedimentationsstabilität und der Redispergierbarkeit gegenüber Formulierungen ohne Dispergiermittel bzw. gegenüber Formulierungen ohne erfindungsgemäße Dispergiermittel erreicht werden.

Insbesondere konnte die Bildung eines festen, kompakten Sediments vermieden werden. Die Erfindung ermöglicht daher eine sehr gute Redispergierbarkeit des Feststoffes im Falle einer Sedimentation nach sehr langer Lagerung, so dass beispielsweise ständiges Rühren oder Durchmischen bei langer Lagerung nicht mehr erforderlich ist.

## Patentansprüche

1. Zusammensetzung zur Herstellung von Phenolschaum, umfassend mindestens ein Phenolharz, mindestens ein Treibmittel, mindestens einen Katalysator sowie mindestens einen Feststoff, **dadurch gekennzeichnet, dass** sie mindestens ein Tensid ausgewählt aus der Gruppe der quartären silizium-freien Ammoniumverbindungen enthält.

2. Zusammensetzung nach Anspruch 1, **dadurch gekennzeichnet, dass** das mindestens eine Tensid ausgewählt ist aus der Gruppe bestehend aus Esterquat der Formel (1), Esterquat der Formel (2), Alkylquat der Formel (3), Imidazoliniumquat der Formel (4), Amidoaminquat der Formel (5) und Cetylpyridiniumchlorid,
wobei 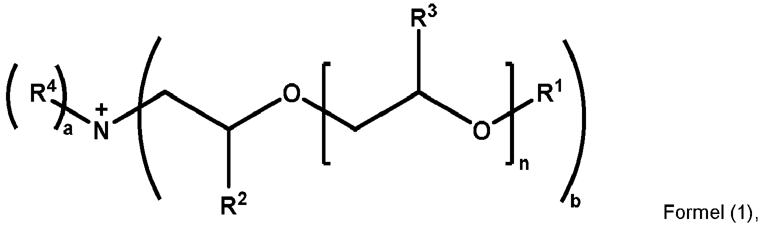 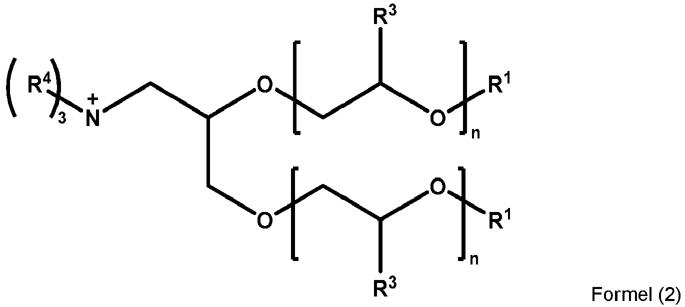
mit R¹ ein Acylrest einer gesättigten oder einfach oder mehrfach ungesättigten, linearen oder verzweigten Fettsäure mit einer Kettenlänge von 8 bis 22 Kohlenstoffatomen oder der Acylrest der Rizinolsäure, oder Wasserstoff,
wobei eine Verbindung der Formel (1) oder (2) unterschiedliche Reste R¹ enthalten kann und mit der Maßgabe das mindestens ein Rest R¹ einer der genannten Acylreste sein muss,
mit R² jeweils unabhängig voneinander ein Alkylrest mit 1 bis 6 Kohlenstoffatomen oder Wasserstoff, bevorzugt Wasserstoff, Methyl, Ethyl, Propyl oder Isopropyl, besonders bevorzugt Wasserstoff oder Methyl,
mit R³ jeweils unabhängig voneinander ein Alkylrest mit 1 bis 6 Kohlenstoffatomen oder Wasserstoff, bevorzugt Wasserstoff, Methyl, Ethyl, Propyl oder Isopropyl, besonders bevorzugt Methyl oder Wasserstoff,
mit R⁴ ein Alkylrest mit 1 bis 6 Kohlenstoffatomen oder ein Hydroxyethylrest oder Wasserstoff, bevorzugt Methyl, Ethyl, Propyl oder Isopropyl, besonders bevorzugt Ethyl oder Methyl, ganz besonders bevorzugt Methyl,
wobei eine Verbindung der Formel (1) und/oder (2) unterschiedliche Reste R⁴ enthalten kann und
wobei n = 0 bis 20, bevorzugt 0 bis 10, besonders bevorzugt 0,
wobei a = 1 bis 3 und b = 1 bis 3,
mit der Maßgabe, dass a + b = 4,
und/oder wobei 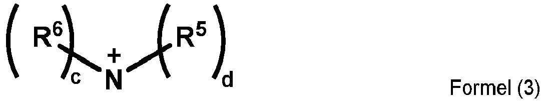
mit R⁵ ein gesättigter oder einfach oder mehrfach ungesättigter, linearer oder verzweigter Alkylrest mit einer Kettenlänge von 8 bis 24 Kohlenstoffatomen,
wobei eine Verbindung der Formel (3) unterschiedliche Reste R⁵ enthalten kann,
mit R⁶ ein Alkylrest mit 1 bis 6 Kohlenstoffatomen oder ein Hydroxyethylrest oder ein Benzylrest oder Wasserstoff, bevorzugt Methyl, Ethyl, Propyl, Isopropyl oder Benzyl, besonders bevorzugt Ethyl oder Methyl, ganz besonders bevorzugt Methyl,
wobei eine Verbindung der Formel (3) unterschiedliche Reste R⁶ enthalten kann und
wobei c = 1 bis 3 und d = 1 bis 3,
mit der Maßgabe, dass c + d = 4,
und/oder wobei 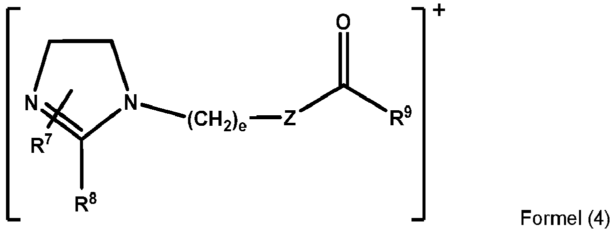
mit R⁷ ein Alkylrest mit 1 bis 6 Kohlenstoffatomen oder ein Hydroxyethylrest oder Wasserstoff, bevorzugt Methyl, Ethyl, Propyl oder Isopropyl, besonders bevorzugt Ethyl oder Methyl, ganz besonders bevorzugt Methyl,
mit R⁸ ein gesättigter oder einfach oder mehrfach ungesättigter, linearer oder verzweigter Alkylrest mit 8 bis 22 Kohlenstoffatomen oder ein Rest O(CO)R¹⁰, mit R¹⁰ ein aliphatischer, gesättigter oder einfach oder mehrfach ungesättigter, linearer oder verzweigter Alkylrest mit 7 bis 21 Kohlenstoffatomen,
mit R⁹ ein aliphatischer gesättigter oder einfach oder mehrfach ungesättigter, linearer oder verzweigter Alkylrest mit 7 bis 21 Kohlenstoffatomen,
mit Z eine NH-Gruppe oder Sauerstoff,
wobei e ganzzahlige Werte zwischen 1 und 4 annehmen kann,
und/oder wobei, 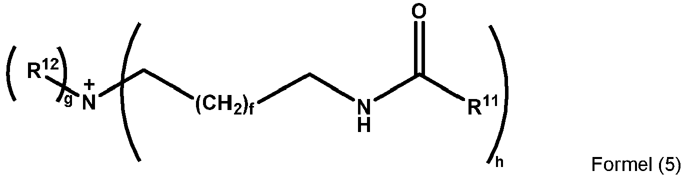
mit R¹¹ ein gesättigter oder einfach oder mehrfach ungesättigter, linearer oder verzweigter Alkylrest mit einer Kettenlänge von 7 bis 21 Kohlenstoffatomen,
mit R¹² ein Alkylrest mit 1 bis 6 Kohlenstoffatomen oder ein Hydroxyethylrest oder Wasserstoff, bevorzugt Methyl, Ethyl, Propyl oder Isopropyl, besonders bevorzugt Ethyl oder Methyl, ganz besonders bevorzugt Methyl,
wobei eine Verbindung der Formel (5) unterschiedliche Reste R¹² enthalten kann und
wobei f ganzzahlige Werte zwischen 0 und 5 annehmen kann,
wobei h = 1 oder 2 und g = 2 oder 3,
mit der Maßgabe das h + g = 4,
wobei eine Verbindung der Formel (5) für h = 2 unterschiedliche Werte für f annehmen kann und unterschiedliche Reste R¹¹ enthalten kann,
sofern R⁴, R⁶, R⁷ oder R¹² einen Hydroxyethylrest umfasst, kann dieser auch alkoxyliert sein und dieser ggf. alkoxylierte Hydroxyethylrest kann Wiederholeinheiten auf Basis von Ethylenoxid, Propylenoxid, Butylenoxid und/oder Styroloxid enthalten und 1-15 Wiederholeinheiten, bevorzugt 1-10 Wiederholeinheiten, umfassen.

3. Zusammensetzung nach Anspruch 2, **dadurch gekennzeichnet, dass** in Formel (1) und/oder Formel (2) R¹ jeweils unabhängig voneinander ausgewählt ist aus den Acylresten der Säuren aus der Gruppe bestehend aus Ölsäure, Isostearinsäure, Laurinsäure, Palmitinsäure, Elaidinsäure, Vaccensäure, Gadoleinsäure, Icosensäure, Cetoleinsäure, Erucasäure, Nervonsäure, Linolsäure, Alpha-Linolensäure, Gamma-Linolensäure, Calendulasäure, Punicinsäure, Alpha-Elaeostearinsäure, Beta-Elaeostearinsäure, Arachidonsäure, Timnodonsäure, Clupanodonsäure und Cervonsäure.

4. Zusammensetzung nach einem der Ansprüche 2 oder 3, **dadurch gekennzeichnet, dass** in Formel (1) a = b = 2 und/oder in Formel (5) h = 1 und g = 3 ist.

5. Zusammensetzung nach einem der Ansprüche 2 bis 4, **dadurch gekennzeichnet, dass** zusätzlich enthalten ist mindestens ein Gegenanion zu den Verbindungen der allgemeinen Formeln (1), (2), (3), (4) und/oder (5) ausgewählt aus der Gruppe bestehend aus Chlorid, Bromid, lodid, Alkylsulfat, Ethylsulfat, Alkylsulfonat, Triflat, Tosylat, Phosphat, Sulfat, Hydrogensulfat, Lactat, Glycolat, Acetat und Citrat.

6. Zusammensetzung nach einem der Ansprüche 1 bis 5, **dadurch gekennzeichnet, dass** der mindestens eine Feststoff ausgewählt ist aus der Gruppe bestehend aus
(a) feste Flammschutzmittel, vorzugsweise Ammoniumpolyphosphat, Melamin, Melaminbeschichtetes Ammoniumpolyphosphat, Melamin mikroverkapseltes Ammoniumpolyphosphat, Melamin-Formaldehydharz mikroverkapseltes Ammoniumpolyphosphat, Melamincyanurat, roten Phosphor, Zinkborat, Melaminpolyphosphat, Blähgraphit und/oder Antimontrioxid, insbesondere roter Phosphor und/oder Ammoniumpolyphosphat,
(b) Kunststoffpulver,
und
(c) Calciumcarbonat, Graphit, Graphen, Lignin, Lignocellulose, Metallhydroxide, bevorzugt Aluminiumhydroxid und/oder Magnesiumhydroxid, Metallcarbonate, bevorzugt Calciumcarbonat, Magnesiumcarbonat, Bariumcarbonat und/oder Zinkcarbonat, Metalloxide, bevorzugt Aluminiumoxid und/oder Zinkoxid, und/oder Metallpulver, bevorzugt Zink.

7. Zusammensetzung nach Anspruch 6, **dadurch gekennzeichnet, dass** das feste Flammschutzmittel roten Phosphor und/oder Ammoniumpolyphosphat enthält.

8. Zusammensetzung nach einem der Ansprüche 1 bis 7, **dadurch gekennzeichnet, dass** mindestens ein Kunststoffpulver enthalten ist, wobei das mindestens eine Kunststoffpulver aus mindestens einem Kunststoff, ausgewählt aus der Gruppe bestehend aus Polyethylen, Polypropylen, Polyamid, wie insbesondere PA6, PA6.6, PA10, PA11 und/oder PA12, Polyester, wie insbesondere Polyethylenterephthalat, Polybutylenterephthalat und/oder Poly-ε-Caprolacton, Polystyrol, Polyacrylat, Polymethylmethacrylat, Polycarbonat, Styrol-Acrylnitril-Copolymere, Polyether, Polymilchsäure, Polyurethan, Phenolharz, Phenolschaum, Polysulfon, Polyethersulfon, Polyetherimid und Polyimid oder Mischungen davon, besteht, wobei das Kunststoffpulver besonders bevorzugt aus Abfallkunststoffen, insbesondere bevorzugt aus Phenolharz- und/oder Phenolschaum-Abfallkunststoffen gebildet sein kann.

9. Zusammensetzung nach einem der Ansprüche 1 bis 8, **dadurch gekennzeichnet, dass** es sich bei dem mindestens einen Feststoff um ein Pulver mit einem mittleren Partikeldurchmesser von < 500 µm, vorzugsweise < 250 µm, insbesondere bevorzugt < 150 µm handelt.

10. Zusammensetzung nach einem der Ansprüche 1 bis 9, **dadurch gekennzeichnet, dass** das mindestens eine Tensid in einer Gesamtmenge von 0,1 bis 20 Gewichtsteile, vorzugsweise 0,1 bis 15 Gewichtsteile, besonders bevorzugt 0,1 bis 10 Gewichtsteile, bezogen auf 100 Gewichtsteile des gesamt eingesetzten Phenolharzes, enthalten ist.

11. Zusammensetzung nach einem der Ansprüche 1 bis 10, **dadurch gekennzeichnet, dass** der mindestens eine Feststoff in einer Gesamtmenge von 1 bis 100 Gewichtsteile, vorzugsweise 1 bis 60 Gewichtsteile, besonders bevorzugt 5 bis 50 Gewichtsteile, bezogen auf 100 Gewichtsteile des gesamt eingesetzten Phenolharzes, enthalten ist.

12. Zusammensetzung nach einem der Ansprüche 1 bis 11, **dadurch gekennzeichnet, dass** zusätzlich alkoxyliertes, bevorzugt ethoxyliertes, Rizinusöl in einer Gesamtmenge von 0,5 bis 10 Gewichtsteilen, vorzugsweise 1 bis 8 Gewichtsteilen, bezogen auf 100 Gewichtsteile des gesamt eingesetzten Phenolharzes, enthalten ist,
und/oder
dass zusätzlich mindestens ein Polyethersiloxan, in einer Menge von 0,5 bis 10 Gewichtsteile, bezogen auf 100 Gewichtsteile des gesamt eingesetzten Phenolharzes, enthalten ist.

13. Zusammensetzung nach einem der Ansprüche 1 bis 12, **dadurch gekennzeichnet, dass** das mindestens eine Treibmittel ausgewählt ist aus der Gruppe bestehend aus
- Kohlenwasserstoffen mit 3, 4 oder 5 Kohlenstoff-Atomen, bevorzugt cyclo-, iso- und/oder n-Pentan,
und
- halogenierten Kohlenwasserstoffen mit 3, 4 oder 5 Kohlenstoff-Atomen, bevorzugt Hydrofluoroolefine und/oder Hydrohaloolefine, weiter bevorzugt 1234ze, 1234yf, 1224yd, 1233zd(E) und/oder 1336mzz.

14. Verfahren zur Herstellung von Phenolschaum unter Einsatz einer Reaktionsmischung enthaltend eine Zusammensetzung wie in einem der Ansprüche 1 bis 13 definiert.

15. Phenolschaum hergestellt gemäß dem Verfahren nach Anspruch 14.

16. Verwendung des Phenolschaums nach Anspruch 15 zur thermischen Isolation.
